# EUROPEAN PATENT APPLICATION

(11) **EP 4 230 596 A1**
(43) Date of publication of application: **23.08.2023**
(21) Application number: 22157362.9
(22) Date of filing: 17.02.2022
(51) Int. Cl.: C03C 25/42, E04B 1/80, G06F 30/13

(54) **VACUUM INSULATION PANEL WITH A CONTINUOUS METAL COATED POLYMER CORE BOX**

(71) Applicant: Dupont, Thomas, 75116 Paris (FR)
(72) Inventor: Dupont, Thomas, 75116 Paris (FR)

(57) **Abstract**

Vacuum insulation panels (1a), manufacturing methods thereof, and, in the particular application of the building construction industry, Thermal Resistance certification method for a wall insulated with thereof. The vacuum insulation panels of the present invention comprise an Under-Vacuum Core Box (2a) made of an upper panel, a lower panel and sides panels forming a decompressed space. Panels are made of polymer or fiber-reinforced polymer and the decompressed space may contain some beams or compression members in order for the Core Box to have sufficient structural integrity to support the vacuum inside it. The under-vacuum Core Box can be manufactured with an under-vacuum overmolding process in which a lower Core Box piece (201) is sealed to an upper Core Box piece (202) with an overmolded seal (202) in a vacuum environment. Once the Core Box is closed and under vacuum, a continuous metal coating is produced on all the external Core Box surfaces with a Physical Vapor Deposition process (PVD). An optional protection (4) avoids any damage of the metal barrier (3). A laying method comprising a simple certification process for the Thermal Resistance of a building wall insulated with vacuum insultation panels is described.

## Description

### TECHNICAL FIELD OF THE INVENTION

The present invention relates to Vacuum Insulation Panels (VIPs), to manufacturing methods thereof, and, in the particular application of building construction, to a certification method of the Thermal Resistance a wall insulated with VIPs.

### BACKGROUND ART

VIPs are very much used as insulation materials in many applications including home appliances (refrigerators, freezers, water boilers, warm water storage tank ...) and transportation (truck, containers, ships ...), and are sometimes used in the building construction (real estate).

In the building construction industry, energy savings through insulation are constantly searched. In order to improve building insulation, the most used method is to thicken traditional insulation materials laid on walls. This traditional solution has the disadvantage of leading to a significant loss of the usable floor space. The other solution is to use VIPs which constitute a high-performance thermal insulation system with a low material thickness. However, these VIPs are in fact very little used due to:
- their relative high cost compared to conventional insulation materials;
- their slow efficiency deterioration over the years due to leaks;
- their great sensibility to mechanical damage as a perforated VIP loses most of his insulation performance. This low robustness of handling is particularly sensitive in this industry where many processes are not industrial and are realized at the construction site;
- their laying methods that are too complex, time consuming and expensive to be used at the construction site;
- the difficulty to certify the Thermal Resistance of a wall insulated with VIPs.

Previously known VIPs are generally composed of a microporous core made of powders or fibers or blends thereof. For example, the core may be form of particulate silicate or fumed silicate which have the advantage of being quite a good insulation material when under vacuum, but have the disadvantage of being quite heavy. This microporous core is wrapped in a gas-tight envelope. It is typical for the gas-tight envelope to be made of metallized polymer film which is a polymer film coated with one or more metallized layers. For example, aluminum metallized PET (polyethylene terephthalate) has been used to make VIP envelopes. The air is evacuated from the envelope and the envelope is sealed so that vacuum is trapped inside the panel. The vacuum inside previously known VIPs is referred as an internal pressure of less than 1 mbar (millibar), which is equal to 100 Pa (SI units). For instance, the internal pressure of previously known VIPs can be 0,5 mbar (or 50 Pa). A mechanical protection is then made around the core to protect the metal barrier.

When referring to the present invention, the term Pa is the SI unit Pascal.

Advantageously, the vacuum being an absence of material, VIPs have very good thermal properties. Thermal conductivity of VIPs are typically of the order of about 0,005 W/(m.K).

All Thermal Conductivity values expressed here are measured in Watts (or miliwatts) per meter kelvin.

Several patents have been granted in relations with VIPs, for instance the patent with the following specifications: International Publication Number WO 2018/069116 A1 - Internal Publication Date: 19 april 2018 - Priority Date 4 October 2017 - Applicant: KINGSPAN HOLDING (IRL) LIMITED.

Metallized polymer films used for the VIP envelope are manufactured by applying a metal coating on a polymer film with a "Physical Vapor Deposition" process (PVD), also known as "vacuum metallization process". The PVD process is a well-known technic that is used in various industries such as aerospace, medical tools, automotive industry, food packaging industry, etc. It is a vacuum chamber process and it consists of a source of vapor (atomic or molecular) of the material to be deposited, transport of the vapor to the surface of a substrate to be coated, and condensation on the surface of the substrate to form a coating with the desired properties. The two most common PVD processes are Sputtering and Thermal Evaporation. The pressure inside the vacuum chamber used for the PVD process is from 0,01 to 0,001 Pa. As a result of this process, a very thin and steady layer of metal coating is applied to the surface of the substrate. The substrate can be something else than a polymer film as long as it has plain and smooth surfaces. Vacuum Metal Coatings are thin. The metallized layer thickness of a traditional VIP envelope is typically of the order of 0,1 to 0,6 microns. The thickness of the metal layer can for instance be of 0,18 microns.

When referring to the present invention, the term microns is the SI unit micrometers.

There are many factors that influence the VIP Thermal Conductivity, including the conductivity of the different materials used, the thickness and the arrangement of the different layers of material.

In previously known VIPs, the core formed with a microporous material provides the dimensional stability needed to encapsulate the vacuum inside the metallized film. However, notwithstanding the type of material used for the core, it has the inconvenience of conducting the heat through the panel.

In previously known VIPs, the airtight envelope is made with the wrapping of a metallized polymer film. However, this envelope is not an absolute airtight barrier and it leaks very slowly during the VIP period of use as some air or water is entering the VIP by migration. These leaks are in particular due to the envelope seals (polymer against polymer) which do not possess a metal barrier on their edges. This gas or water migration phenomenon leads to a slow deterioration of the panel conductivity efficiency over the years and degrade the VIP long-term duration life.

Furthermore, in the appliance industry (fridge, refrigerator, etc), the metallized polymer film is not completely satisfactory as it may wrinkle, as it creates a deviation of thickness of VIP, and may create a non-uniform surface for the VIP.

Attempts have been made to manufacture VIPs without using the microporous core material nor the metalized film. However, these attempts are not satisfying for the moment. The patent WO 2011/016695 A2 (applicant LG Electronics Inc) can for instance be noted. It claims a vacuum insulation panel comprising a core having certain shape and having a decompression space therein and a gas barrier layer formed by coating a certain material on the surface of the core. However, this very large claim should not make us forget that, in the description and in the manufacturing process described in this patent:
- the core is realized with two parts that are sealed, the first part being the body and the second part being the cover;
- the coating forming the metal barrier is made before the closing of the core;
- Consequently, the join between the body and the cover is not protected by a coating and, thus, the airtight metal barrier is not continuous.
As a result, this VIP leaks slowly over time like the other previously known ones.

VIPs are manufactured industrially in factories. For use in the building construction industry, manufacturers produce different "VIP Type" having different sizes. Each "VIP Type" has its own length, its own width, but within the same range, they all have the same thickness.

In the building industry, the laying method of previously known VIPs is the following (figure 12 and 13):
- As previously known VIPs with microporous core are quite heavy (about 150 to 250 Kg/m3), it is generally necessary to build first on the wall a PVC or metallic structure with U or T horizontal rails in order to support the VIPs weight. Then, VIPs are put in position, their sides leaning on the horizontal rails that support their weights, and are then glued on the wall. This first step is particularly time consuming and expensive and it is necessary to provide lighter VIPs able to be laid with a much simpler method;
- As VIPs cannot be cut because they lose their thermal efficiency when they are perforated, some wall space cannot be filled with VIPs. This space is then filled with a traditional insulation material that can be cut (polystyrene for instance). This insulation traditional material has the same thickness than the VIPs and is called the Filling Material. When the Filling Material has been laid, the insulation VIP layer is realized;
- Then, an optional (not compulsory) second insulation layer is realized with, for instance, rockwool or glass-wool, an insulation material that can be perforated, to avoid the piercing of the VIPs during their lifetime. For instance, a screw may be drove in the plasterboard in order to hang a picture or a furniture. Thanks to the thickness of the second layer, the screw enters the second layer but doesn't pierce the VIPs;
- The wall insulation is generally finished with a plasterboard or a wood-board.

Thermal border effects are present in VIPs. For this reason, "big" VIPs have much better thermal efficiency than "smaller" VIPs. The term "big" or "small" refers here to the size of the VIP, that is to say the multiplication of the width by the length of the VIP. It is important, in order to get the best thermal efficiency of the insulated wall, to lay VIPs on as much wall space as possible with as few VIPs as possible. Generally, a layout plan must be realized before the layout. This layout plan is generally made with several VIP Type, each VIP Type having its own width and length but the same thickness.

In the building industry, it is necessary to know the Thermal Resistance (R Value expressed in m²K/W) of an insulated wall. While the calculation of the Thermal Resistance of traditional homogeneous material is very simple, the calculation of the Thermal Resistance of a wall insulated with VIPs is more difficult because it depends on:
- the Thermal Resistance of each VIP Type (for instance R1, R2, R2 if three VIP types are used);
- The Thermal Resistance of the Filling Material, Rfill;
- The percentage of the wall surface covered by each "VIP Type" and by the Filling Material (for instance %1, %2, %3 and %fill is three VIPs are used).

When a VIP layout plan is realized before the layout, the theoretical Thermal Resistance of the wall, Rwall, can be calculated. In the case of the usage of three VIP Types for instance, the formula is : Rwall = 1 / ( %1/R1 + %2/R2 + %3/R3 + %fill/Rfill ).

A major problem is that, once VIPs have been laid and covered with a plasterboard or a wood-board, VIPs are not visible and the percentage of wall surface covered by each material cannot be determine any more. The real Thermal Resistance can be neither calculated nor certified. It is necessary to provide a process of use for VIPs allowing a simple and quick certification of the Thermal Resistance of a wall insulated with VIPs independently of any previous layout plan.

The present invention uses, for the manufacturing of the vacuum insulation panels, the Overmolding Manufacturing Process which is a well-known polymer injection molding process where one material is molded onto a second material. If properly selected, the overmolded material will form a strong bond with the second material. The use of primers or adhesives is no longer required to achieve an optimum bond between the two materials.

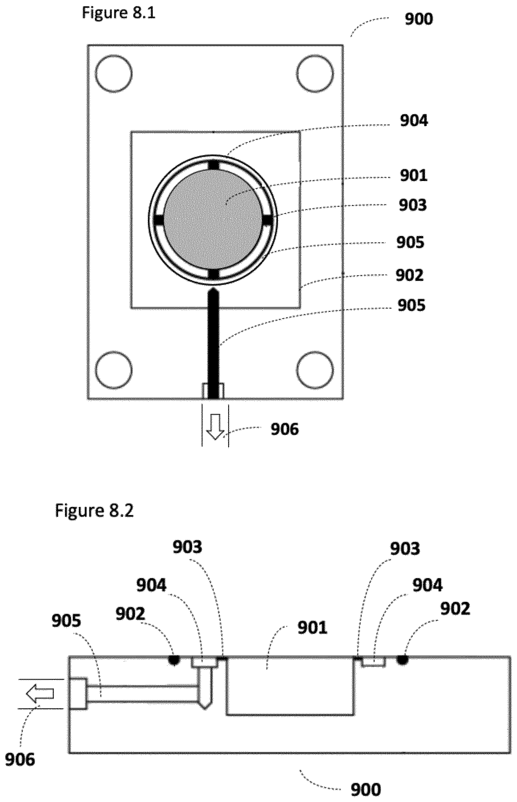

The present invention uses a process used in the injection molding industry: the mold cavity depression. This technic is used to remove gas from the cavity mold that sometime affects the production quality. Figure 8 explains the apparatus used in this technology.

### TECHNICAL PROBLEM TO BE SOLVED

Notwithstanding the various available VIPs, it is desirable to provide an alternative design with alternative materials for VIPs, as well as an alternative manufacturing process for VIPs used in every type of application. It is then necessary to:
- provide more affordable VIPs;
- provide VIP with a continuous metal barrier, without the presence of seal not covered by a metal barrier that affect greatly the long-term duration life of VIPs;
- eliminate the traditional wrapping of an envelope which can wrinkle and which have non-coated seals;
- provide lighter VIPs.

In the particular application of the building construction, it is as well necessary to provide:
- much lighter VIPs with a high robustness when manipulated, allowing a simpler and cheaper laying method when used in the particular application of building construction;
- a process of use for VIPs allowing a certification of the Thermal Resistance of a wall insulated with VIPs independently of any previous layout plan.

### DISCLOSURE OF THE INVENTION

### VIPs of the present invention

The present invention provides a new way:
- of building a VIP without using the classical metallized polymer film, and without any seal or join not covered with a metal barrier;
- of manufacturing VIPs.

Furthermore, for the particular application in the building construction, the present invention provides a new way:
- of building an External Protective Box;
- of using VIPs on the building construction site with a simple usage Thermal Resistance certification process of a wall insulated with VIPs.

In one aspect, the present invention provides a vacuum insulation panel comprising:
- an under-vacuum Core Box:
   i. made of an upper panel, a lower panel, and sides panels forming a decompressed space;
   ii. having a certain shape, not necessarily parallelepiped, panels having the possibility to be curved;
   iii. with a depression applied inside it comprised between 10-3 Pa and 150 Pa;
- an airtight barrier formed with a continuous metal coating directly on all the external surfaces of the core, without any core seal or join being not covered with the metal barrier;
- an optional mechanical protection around the metal barrier, optional meaning that some vacuum insulation panels may not have this protection.

The decompression and the vacuum is referred here as an internal pressure between 10-3 Pa and 150 Pa. For instance, the internal pressure can be 50 Pa (0,5 millibar).

Panels of the Core Box are made of a polymer or of fiber reinforced polymer composite material (short or long fibers), which are materials with sufficient mechanical and insulation properties. For instance, this material can be Polyvinyl chloride (PVC), or short glass-fiber reinforced PVC, material which has furthermore the advantage of having good fire resistance properties.

The Core Box is designed so that it maintains its structural integrity when the atmospheric pressure applies on the Core Box surface panels due to the vacuum inside the Core Box. It is to be noticed that, as a pressure of about 50 Pa is maintained inside the VIP, the pressure applied by the atmosphere on the external panels is about 101 275 Pa at sea level, meaning that the force applied for instance on a panel of 0,3 meters by 0,3 meters is of about 9100 Newtons. This force of 9100 Newtons is the equivalent of a weight of 927 Kg (kilograms) on a panel of 0,3 meters by 0,3 meters.

In order to maintain a structural integrity, several solutions are possible and some are described here:
- First solution: the decompressed space doesn't contain any material and the Core Box sides are thick enough to maintain the structural integrity;
- Second solution: the decompressed space contains some structural elements such as beams or compression members between the upper and the lower panel made with polymer or fiber reinforced polymer. The decompressed space doesn't contain any microporous material. Such polymer-based structures are possible to design and manufacture. Plastic pedestals for terraces or honeycomb gravel stabilizers used in the building industry are a good example of such designs and manufacturing methods;
- Third solution: The inside of the decompressed space is filled with a microporous core material as for instance a particulate silicate material;
- Fourth solution: The inside of the decompressed space contains a mix of structural reinforcements such as beams and compression members made with polymer or fiber reinforced polymer, and some other material such as for instance a microporous material. This mix of materials can for instance be a honeycomb made with polymer material wherein certain cells are filled with a microporous material. It can as well be hollow posts from the upper to the lower panel filled with a microporous material.

The thickness of the Core Box sides panels is as low as possible because the Core Box sides constitute a thermal bridge that degrades the VIP thermal characteristics. However, the thickness of the upper and lower Core Box panels can be higher than the one for the sides because they do not constitute a thermal bridge.

Suitable, the thickness of Core Box sides is between 0,3 millimeter to 6 millimeter and the thickness of the Core Box upper and lower surfaces is between 0,3 millimeter to 10 millimeter.

The airtight barrier of the present invention is called Direct Metal Coating Barrier. It is a continuous metal coating made directly on all the external surfaces of the Core Box with a Physical Vapor Deposition process (PVD) that is carried out after the decompression and the closing of the Core Box.

The metal coating can be made of aluminum.

For the Direct Metal Coating Barrier, the Core Box metal coating must be thick enough to ensure the airtightness. However, the coating must be as thin as possible, especially on the Core Box sides because the metal on the sides constitutes a thermal bridge for the VIP. The metal coating can be thicker on the upper and lower surfaces because it doesn't constitute a thermal bridge.

Suitable, for the Direct Metal Coating Barrier, the Core Box sides metal coating thickness is comprised between 0,05 microns to 3 microns. A thicker coating from 0,05 microns to 5 microns can be realized on the upper and lower panel surfaces, for instance a metal coating of 3 micrometers.

Advantageously, all the external surfaces are continuously metallized with a metal coating, even the smallest. There are no such things as seals or joins that are not covered with the metal coating, as it is the case for the traditional VIP metallized polymer film envelope or as it is the case with the VIP of the patent WO 2011/016695 A2 presented earlier. As a result, the airtight barrier is much better than any previously known metal barrier used for VIPs, especially for the VIP long-term duration life as there are no such things as gas migration through non coated joins or seals.

Once the Core Box is decompressed and closed, and once the metal coating is realized, the Core Box is referred in this document as the Under Vacuum Metallized Core Box.

When used in certain industries, for instance home appliance like refrigerator or freezer, Under Vacuum Metallized Core Box can be used without any mechanical protection or with any kind of mechanical protection.

On the opposite, other industries like the building construction industry (real estate) or the transportation industry (trucks, ships, containers ...) require a stronger mechanical protection of the Under-Vacuum Metallized Core Box. A specific mechanical protection to be used in the building construction industry is presented and is called in the present document the Protective Box.

The Protective Box is a box which has the same shape as the Core Box with interior dimensions slightly bigger than the external dimensions of the Core Box. The Protective Box has its own structural integrity and envelope the Core Box without sticking to it, thus avoiding damaging the metal barrier with a shear effect when the Protective Box is slightly deformed.

The sides of the Protective Box are as thin as possible because they constitute a thermal bridge, but they must be thick enough to ensure a proper protection for the particular application for which the VIP will be used.

The upper and lower surface panels of the Protective Box can be significantly thicker than the Protective Box sides panels. The reason for this is that the sides form a thermal bridge and that, on the contrary, the upper and lower panels complete the thermal insulation of the VIP. Furthermore, VIPs are more likely to be damaged by the upper or lower surfaces than by the sides on the building construction site.

The color of the Protective Box is different for every VIP Type within the same range. Each VIP Type having its own length and its own width, but all the VIP Type having the same thickness within the same VIP range.

The Protective Box is made in a low density and low Thermal Conductivity protective material like for instance polymer foam. With this low-density material, the panel weight stays low and the VIP can be easily manipulated and laid on the walls or ceilings. Furthermore, with this low Thermal Conductivity material, the upper and lower surface panels of the Protective Box complete effectively the thermal efficiency of the VIP. Suitably, in these embodiments:
- the Protective Box may be realized with a polystyrene foam (PS);
- the upper and lower surface panels of the Protective Box have a thickness from 0,5 millimeters to 30 millimeters;
- the side panels of the Protective Box have a thickness from 0,5 millimeter to 10 millimeters.

A similar embodiment may be used in the transportation industry (trucks, ships, containers).

Advantageously, the Protective Box ensures the robustness of the VIP and ensures that from the time of manufacturing through the time of installation and throughout their lifetime, VIPs are protected and are less likely to be accidentally perforated.

VIPs of the present invention can be used in many applications needing insulation as for example: buildings, shipping container, trucks, pipe insulation, or home appliance such as refrigerators or freezers.

VIPs of the present invention have a good Thermal Conductivity value for a VIP between 0,004 W/(m.K) for particularly big VIPs (3 meters long by 2 meters wide for instance) to 0,04 W/(m.K) for smaller VIPs (0,1 meter long by 0,1 meter wide for instance).

VIPs of the present invention:
1. have much longer lifetime than traditional VIPs as the metal coating is continuous all over the external surfaces of the Core Box and as there is no unmetallized seals or joins.
2. are much lighter than traditional VIPs, especially in embodiments in which the decompressed space contains beams or compression members made of polymer or fiber reinforced polymer, but no heavy microporous materials.

### VIPs manufacturing process

The manufacturing process of the Under-Vacuum Metallized Core Box is the following:
1) Firstly, manufacturing of a closed Core Box having a certain shape and having a depression inside it;
2) Secondly, manufacturing a continuous airtight metal barrier on all the external surfaces of the Core Box.

Two manufacturing process are described to manufacture the closed Core Box having a certain shape and having a depression inside it:
- The under-vacuum overmolding process;
- The under-vacuum thermo-sealing or gluing process.

The under-vacuum overmolding process is recommended. In fact, the gluing process introduces dilatation problems on the glued seals that can leads to cracks of the metal barrier and the Thermo-Sealing process introduces an un-smooth seal surface difficult to coat.

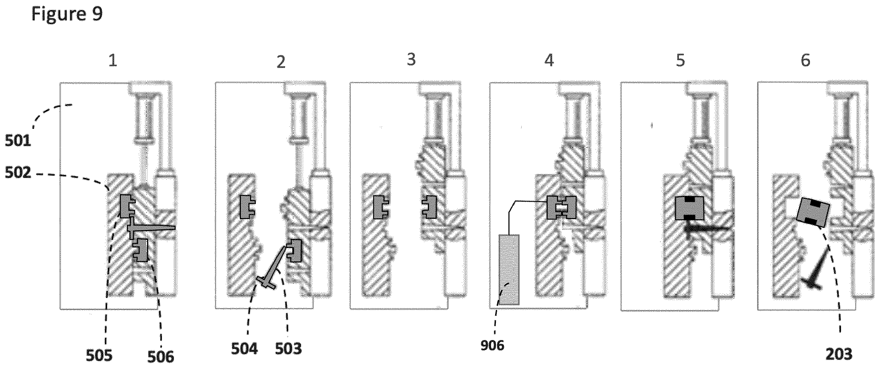

The under-vacuum overmolding process is the following (figure 9):
1) First, two pieces (505 and 506) are manufactured with an injection molding process, at the same time in two parts of the same mold (502);
2) Secondly, the mold is opened after cooling and the sprue (503) and the runner (504) are evacuated;
3) Thirdly, the two parts of the mold are moved so that the two pieces (505 and 506) are brought one in front of another. These two pieces have a special shape so that, when they are presented one in front of another, they perfectly fit to form the closed core box with a notch at their junction;
4) Fourthly, a depression is applied into the mold cavity (901). This depression matches with the depression that will be "trapped" inside the core box, it is then between 10-3 Pa and 150 Pa. The decompression can for instance be realized with the apparatus described in the figure 8 which already exists but which is used sometimes in classical injection molding process, not to make a decompression inside a box, but to remove troublesome gas that cause quality problems. As the pressure that must be inside the mold cavity is very low, the entire ejector system, if any, must be airtight during the phase when the mold cavity is under vacuum. Many systems can be used and among them, air ejector systems equipped with a valve and that can be entirely emptied of air during this phase can for instance work for this application.
5) Fifthly, the notch is filled with an overmolding material thanks another injection molding process, producing a seal of the two pieces;
6) Sixthly, after cooling, the closed core box with a depression inside it is liberated.

Alternatively, another version of this process is that the two pieces (505 and 506) are not manufactured in the same mold were the overmolding takes place but in a different mold. Then, they are put in the overmolding mold which then move so that they are placed one in front of another in the overmolding mold. Then, the process is carried out from step 4.

Alternatively, between the step 2 and the step 3, some compression members made of any material, including microporous material, can be added inside the Core Box. As a result, this material is "trapped" inside the Core Box when it is closed under vacuum.

Alternatively, the entire mold can be put inside a vacuum chamber. In that case, the vacuum needs to be done inside the vacuum chamber either at the beginning of the process, or as a replacement of the step 4.

The under-vacuum overmolding process can be used with polymer or short fiber polymer based composite materials.

It is important to notice that the vacuum applied inside the cavity mold is about 50 Pa. As the injection pressure applied by the screw of a traditional injection machine can be up to 2500 bars (2,5.10⁷ Pa) with the mold being at atmospheric pressure of 1 bar (101 300 Pa), the fact that the mold is put at a low pressure of 50 Pa doesn't make a big change in the pressure difference between the injection pressure and the empty mold pressure. As a consequence, the machine injection operation is almost unchanged.

The Under-Vacuum Thermo-Sealing or Gluing process comprises four steps:
1. Firstly, a Core Box with just one piece missing is manufactured under atmospheric pressure;
2. Secondly, this Core Box with a missing piece is put inside a vacuum chamber. The pressure applied in the vacuum chamber at this stage is the pressure that will be "trapped" inside the VIP. It must be below 150 Pa. It can be for instance of about 50 Pa;
3. Thirdly, while still inside the vacuum chamber, the missing piece of the Core Box is glued or thermo-sealed on the Core Box;
4. Fourthly, the gluing area or the sealing area is cleaned either mechanically (cut, sanding, etc) or chemically until it is smooth and plain.

It has to be notice that:
- the under-vacuum gluing process leads to a seal at the external surface of the Core Box that will later be metal coated. As the glue seal may dilate differently than the rest of the Core Box, this may introduce cracks in the coated metal barrier;
- the under-vacuum thermo-sealing process leads to a different surface finish at the join, and that the join has to be prepared to make it smooth in order to be metal coated.

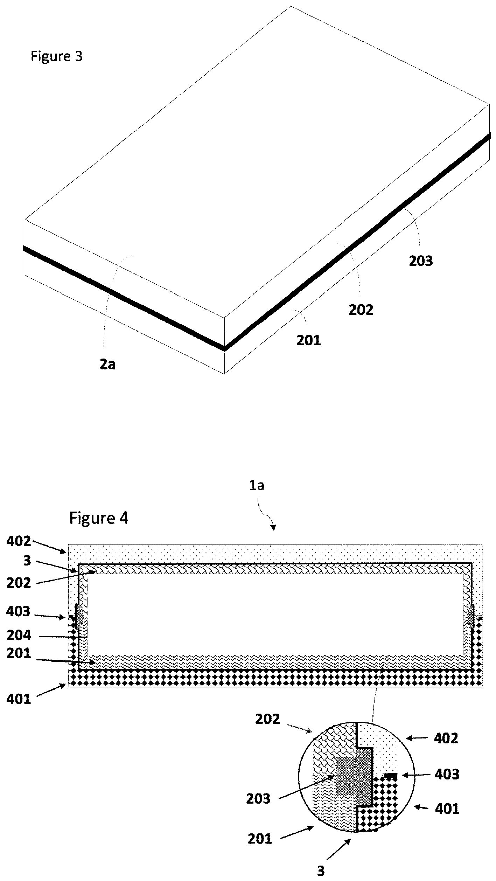

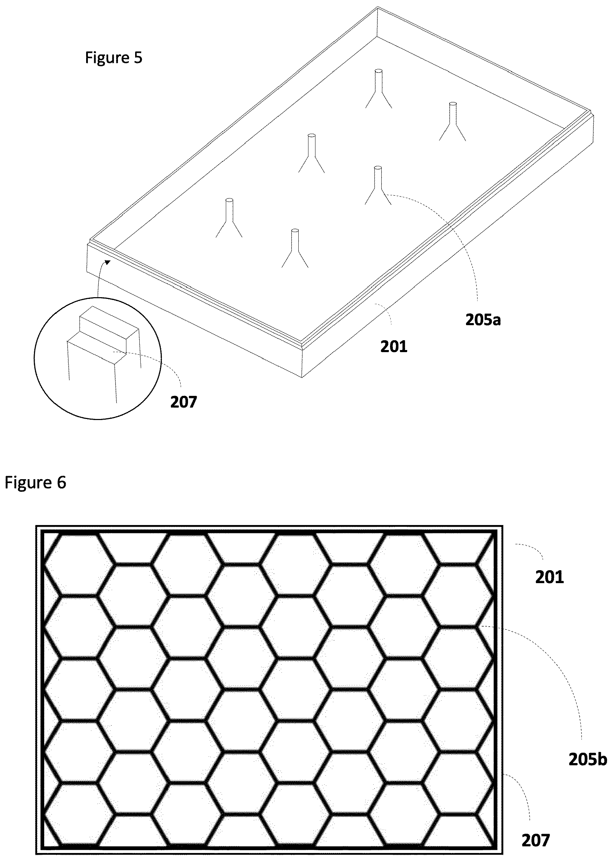

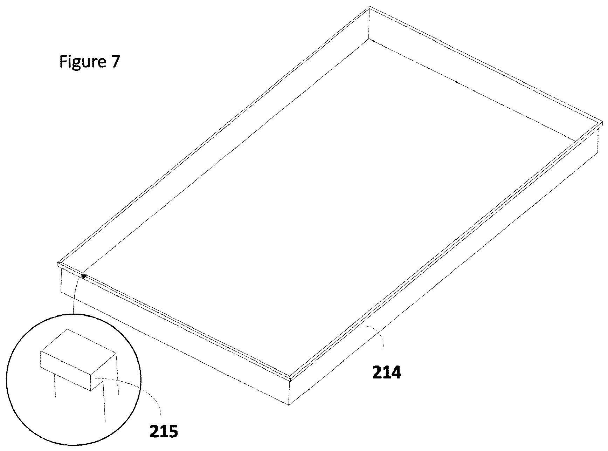

Two different Core Box embodiments are described in the present invention.
1. Embodiment "a" (figure 3, 4, 5 and 6) is made with the vacuum overmolding process:
   In this embodiment, the entire Core Box is made of polymer or fiber reinforced polymer.
   One manufactured piece of the Core Box, called the "upper piece" (202), is the upper panel plus roughly half of the Core Box sides.
   The other manufactured piece of the Core Box, called the "lower piece" (201), is the lower panel, plus the second half of the Core Box sides, plus compression members.
   The notch filled with the Under-Vacuum In-Mold Overmolding process is all around the sides of the Core Box and the overmolded material makes an extra thickness all around the sides of the Core Box.
   The compression members can have the shape of a honeycomb (figure 6) or the shape pf posts (figure 5).
2. Embodiment "b" (figure 7) is made with the under vacuum gluing or thermo-sealing process. In this embodiment:
   - The missing piece is the Core Box upper panel;
   - The Core Box with the missing piece (214) has the shape of a Core Box without the upper panel and with a flared part (215) at the top of its sides. The upper panel and the flared part at the top of the Core Box have sufficient surface in contact with each other to be easily glued or thermo-sealed.
   - A compression piece, like for instance a honeycomb, can be added as a third piece before the thermo-sealing or gluing of the upper panel.

When the Under-Vacuum Core Box manufacturing process is terminated, the Core Box doesn't have a metal barrier protection and then some air can slowly enter inside it. It is then necessary to rapidly manufacture the metal barrier with the following process. Alternatively, the production line can be completely under vacuum so that the under-vacuum core box stays in a vacuum chamber until the manufacturing of the metal barrier begins.

The continuous metal barrier can be realized with any type of coating, including painting coating

However, a very effective metal coating is realized through a Physical Vapor deposition (PVD), also known as the "vacuum coating process". In this method, the Core Box is placed inside a vacuum chamber. The solid metal material that will be used for the coating is vaporized under vacuum. The vapor is transported to the Core Box external surfaces where it condensates to form a metal coating. Once the coating is completed and dry, the metallized Core Box can be removed from the vacuum chamber and put under atmospheric pressure. The PVD can either be a Thermal Evaporation or a Sputtering.

It is important to notice that the Physical Vapor Deposition (PVD) process is a vacuum process carried out in a vacuum chamber at a much lower pressure than 50 Pa as the vacuum chamber pressure of about 0,01 to 0,001 Pa. When the VIP is inside PVD vacuum chamber at a pressure of about 0,001 Pa, the pressure inside the Core Box is still of about 50 Pa and leads to a force applied from the inside of the Core Box to the outside of the Core Box. This pressure of 50 Pa is very low and the Core Box structure can support it. For example, the force from the inside to the outside of a Core Box panel of 0,3 meters by 0,3 meters is of about 4,5 Newtons, the equivalent of 0,41 Kilograms.

In order to diminish thermal bridges created with the metal coating on the sides of the Core Box, the thickness of the metal coating on the sides must be thicker enough to ensure the airtightness but as thin as possible. The coating can be thicker on the upper and lower surfaces.

In order to produce different coating thickness between the upper / lower surfaces and the sides, the following process can be carried out:
1. Firstly, the under-vacuum Core Box external surfaces can be prepared chemically or mechanically to receive the coating;
2. Secondly, the under-vacuum Core Box is tightened by parts of its upper and lower panel and put in the vacuum chamber;
3. Thirdly, a PVD process is operated and a metal coating is made on the Core Box sides and part of the upper and lower panel external surfaces;
4. Fourthly, a cover is put on the sides of the Core Box and the Core Box can be tighten by its sides;
5. Fifhtly, a second PVD process is operated and a metal coating is made on the entire upper and lower panel external surfaces;
6. Once the coating is dry, the metallized Core Box can be removed from the vacuum chamber and put under atmospheric pressure.
The first and the second PVD processes can be carried out in reverse.

The optional external Protective Box is manufactured with the following process:
1. Firstly, the first Protective Box piece, that has the shape of the lower panel plus the sides of the Protective Box is manufactured. This manufacturing can be realized for instance with the thermo-forming of a polymer plain panel;
2. Secondly, the Under-Vacuum Metallized Core Box is inserted inside the first Protective Box piece;
3. Thirdly, the second piece of the Protective Box, the upper panel, is thermo-sealed or glued on the first piece.

### In the building construction industry. VIP laying method and process of certification of the Thermal Resistance of an insulated wall

As the VIPs of the present invention are light and well protected in their Protective Box, they can easily be manipulated and glued directly next to each other, or on one another, on the building wall that must be insulated. It is not necessary to build first a PVC or metal structure with U or T rails in order to support the VIPs weight.

Advantageously, if the VIP Protective Box is made of a polymer foam, a specific solvent-free polyurethane glue or a simple adhesive mortar for standard plaster can be used as a glue for the VIPs. The operator must take care of putting glue nuts on the VIPs before gluing them on the wall, or of using a glue-comb.

Advantageously, some air can flow between the wall and the VIPs through the glue nuts, creating an air layer very useful for the moisture regulation of the building.

As each VIP type laid on the wall has a different color, and as the Filling Material that fills the spaces too small to be filled with VIPs has a different color too, the VIP insulation layer looks like a colored patchwork.

This colored patchwork is very useful for the process of certification, which is a process of use part of the invention:
1. First, once the VIP layer has been realized, meaning once the maximum wall surface has been covered with as few VIPs as possible, and once the holes have been filled with the Filling Material, a picture of the wall is taken;
2. Then, this picture, together with some information about the wall, is downloaded in a software. This software can for instance be a SAAS (software as a service);
3. The software then calculates the Thermal Resistance of the wall.
   The accurate automatic calculation by the software is simplified by the fact that each VIP Type and the Filling Material have different colors. An artificial intelligence, recognizing each VIP Type, can calculate the dimension of the wall and the percentage of space used by each VIP Type.
4. The software then gives the value of the wall Thermal Resistance and a certification of this value on this particular wall. This certification can later be used for instance by the building Thermal Study Office or the building Architect.

Once the picture of the patchwork VIP layer has been taken, the insulation can then be finished like any previously known VIP insulation, that is to say with an optional protective layer of glass-wool or rockwool, plus a plasterboard or wood-board.

### BRIEF DESCRIPTION OF DRAWINGS

Embodiments of the invention will be described, by the way of example only, with reference to the accompanying drawings in which:
Figure 1 is a perspective cut-away view of a vacuum insulation panel with the design "a"
Figure 2.1 and 2.2 are cross-sectional views of a vacuum insulation panel comprising a Core Box, a metal coating and an external Protective Box. The figure 2.2 shows the compression members reinforcements between the upper and the lower parts of the Core Box.
Figure 3 is a perspective view of a Core Box with the design "a". The overmolded seal forming an extra thickness of materials on the sides all around the Core Box.
Figure 4 is a cross-sectional view of a vacuum insulation panel with its external Protective Box and its Under-Vacuum Metallized Core Box with the design "a". The magnifying view shows the overmolded seal.
Figure 5 is perspective view of the lower part of the Core Box in its design "a". In this embodiment, the Core Box lower part is reinforced with some compression members having the shape of posts.
Figure 6 is a top view of the lower part of the Core Box in its design "a". In this embodiment, the Core Box lower part is reinforced with some compression members having the shape of honeycomb.
Figure 7 shows a lower Core Box part with a missing piece in its design "b" where the missing piece is the upper panel.
Figure 8 shows an example of the apparatus used to carry out a depression inside the mold cavity of an injection molding machine.
Figure 9 shows the six steps of the In-Mold Overmolding manufacturing process of the Under-Vacuum Core Box.
Figure 10 shows an example, on a building wall, of a VIP layout. In this example, three VIP Types are used plus a Filling Material.
Figure 11a, 11b and 11c are three cross sectional views of the wall showed in figure 10 and insulated with three layers. a layer of VIPs, a layer of glass wool for protection, and a plasterboard.

### DETAILED DESCRIPTION OF DRAWINGS

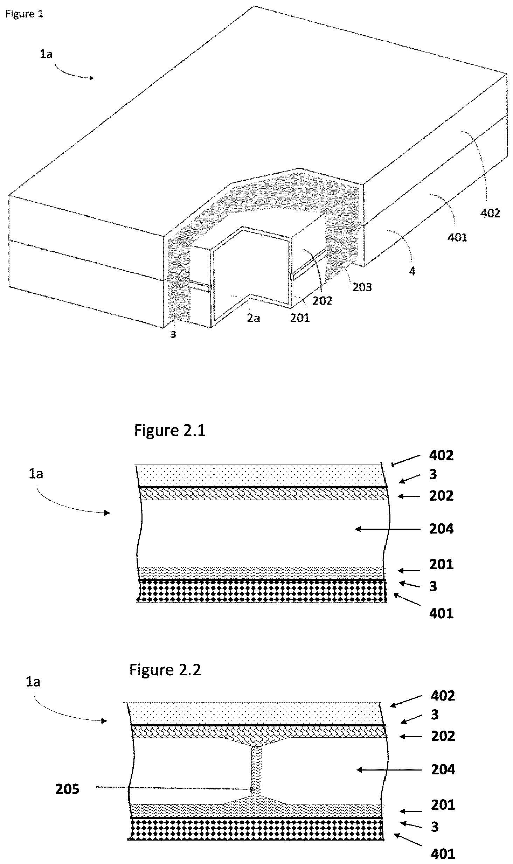

Figure 1 is a perspective cut-away of a VIP 1a in its design "a" according to the present invention. Figure 1 shows a Core Box (2a), having a lower part (201), an upper part (202), an overmolded seal (203) creating an extra thickness of material all around the sides of the Core Box. A metal coating (3) on all the external surfaces of the Core Box. A Protective Box (4) with its lower part (401) and its upper part (402).

Figure 2.1 is a cross-sectional view of a VIP 1a of the present invention. The VIP 1a comprises a Core Box which comprises a lower part (201) and an upper part (202). The Core Box contains a vacuum (204). A metal coating (3) makes an airtight barrier all over the external surface of the Core Box. The coating is protected with an external Protective Box with its lower part (401) and its upper part (402).

Figure 2.2 is a cross-sectional view of a VIP 1a that contains reinforcement members. The lower Core Box part (201) contains a compression member (205) that touches the upper Core Box part (202).

Figure 3 is a perspective view of a Core Box (2a) in its design "a". The Core Box comprises a lower part (201), an upper part (202), and an overmolded seal (203) forming an extra thickness all around the sides of the Core Box.

Figure 4 is a cross-sectional view of a vacuum insulation panel (1a) in its design "a". The VIP contains a Core Box lower part (201) and a Core Box upper part (202). The two parts are sealed together with an overmolded seal (203) that fills the notches of the upper and lower part and lets an extra over-thickness on the sides of the Core Box. The Core Box contains a vacuum (204) and a metal coating (3) is present on all the external surfaces of the Core Box. The Under-Vacuum Metallized Core Box is protected with an external Protective Box comprising two parts (401) and (402) thermo-sealed together with the seal (403).

Figure 5 is perspective view of the lower part (201) of a Core Box in its design "a". In this embodiment, the Core Box lower part (201) is reinforced with some compression members (205a) having the shape of posts. The lower part (201) comprises a notch (207).

Figure 6 is a top view of the lower part (201) of a Core Box in its design "a". In this embodiment, the Core Box lower part (201) is reinforced with some compression members (205b) having the shape of honeycomb. The lower part (201) comprises a notch (207).

Figure 7 shows a Core Box with a missing piece in its design "b" where:
- the missing piece is the upper panel;
- the Core Box with the missing piece (214) contains flared parts (215) at the top of its sides and may be manufactured from a plain panel with a thermo forming process;
- A compression piece, like for instance a honeycomb, can be added as a third piece before the thermo-sealing or gluing of the upper panel.

Figure 8 shows an example of the apparatus used to carry out a depression inside the mold cavity (901) of an injection molding mold (900). Figure 8.1 is top view and figure 8.2 is a cross sectional view of the mold. A "O" ring (902) that can resist high pressures and high temperatures is glued on the mold in order to prevent ambient air from entering the mold cavities when the mold is closed. The cavity mold (901) is linked to an air evacuation system (906) through vents (903), chimney (904) and the air evacuation pipe (905). The entire ejector system, if any, must be airtight during the phase when the mold cavity is under vacuum. Many systems can be used and among them, air ejector systems equipped with a valve and that can be entirely emptied of air during this phase can for instance work for this application.

Figure 9 shows the six steps of the In-Mold Overmolding process of the Core Box with a depression inside it from the production.
- Step 1: the lower and the upper parts of the Core Box are made together at the same time and in the same mold with an injection molding process.
- step 2: A cooling process occurs, the molds are separated, and the sprue (503) and the runner (504) are evacuated
- step 3: while the Core Box parts are still in the mold, one part of the mold is moving in order to put the two parts of the Core Box in front of one another. At this stage, the notches of the upper and lower Core Box parts are exactly in front of one another.
- step 4: the mold is close and a depression is carried out inside the cavity thanks to the air evacuation system (906). Thus, vacuum is applied inside the core box, inside the notch, and inside de runner cavity;
- step 5: an overmolding injection is carried out and the notch is filed with the overmolding material, making an overmolded seal (203).
- step 6: a cooling process occurs and the molds are separated. The sealed Core Box with vacuum inside is then manufactured, realizing an Under-Vacuum Core Box.

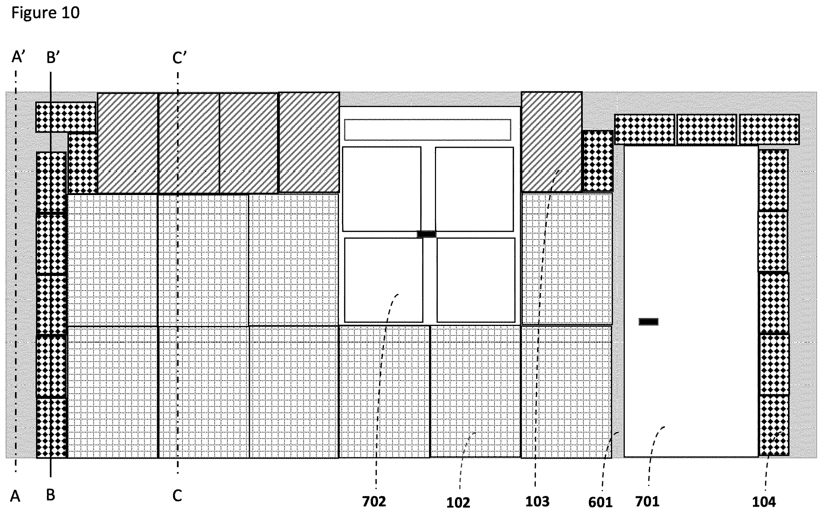

Figure 10 shows an example, of a VIP layout on a building wall. In this example, the wall contains a door (701), a window (702), and three VIP Types having three different dimensions: a big VIP (102) whose dimensions are 90cm/60cm, a middle VIP (103) whose dimensions are 70cm/40cm, and a little VIP (104) whose dimensions are 40cm/20cm. The operator who laid the VIP of this wall has begun the laying by putting big VIP at the bottom of the wall under the window and has carried out the laying by putting as much big VIPs as possible on the wall. Then he has filled the holes with middle VIPs, and then with small VIPs. Once he has covered as many parts of the wall as possible with VIPs, he was filled the holes with a Filling Material which is another insulation material (601), polystyrene or polyurethane for instance.

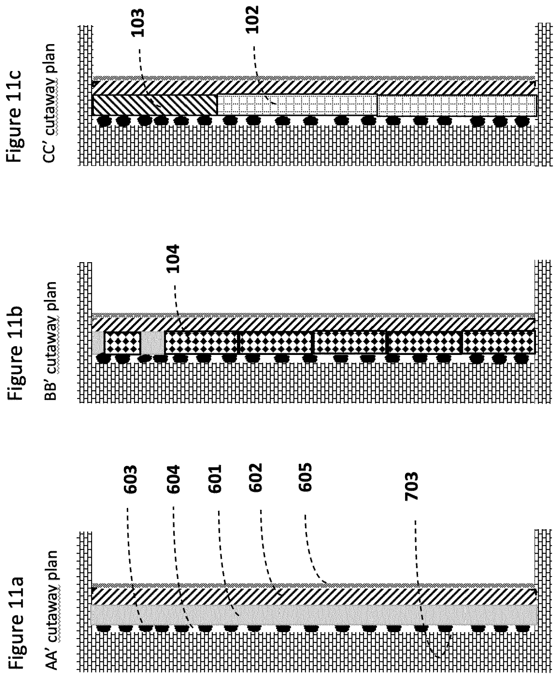

Figure 11a, 11b and 11c are three cross sectional views of the wall showed in figure 10 and insulated with three layers:
- Figure 11a is the cross-sectional view AA' of the VIP layout of the wall showed in figure 10. In this cross-sectional view, the first insulation layer is composed of polystyrene or polyurethane (601) glued on the bearing wall (703) with a glue or mortar (603). As the glue is laid in nuts or laid with a glue-comb, some air (604) is trapped between the wall and the polystyrene/polyurethane, which is very useful for the moisture regulation of the building. A second layer is composed of glass wool or rockwool, insulation material that can be drilled and easily laid (602). Then, a protective and esthetic plasterboard (605) finishes the wall laying.
- Figure 11b is the cross-sectional view BB' of the VIP layout of the wall showed in figure 10. In this cross-sectional view, a first layer is composed of five small VIPs (104) laid vertically, some polystyrene or polyurethane (601), one small VIP (104) laid horizontally, and finally some polystyrene or polyurethane (601). Both VIPs and polystyrene/polyurethane are glued on the bearing wall (703) with a glue or mortar (603). As the glue is laid in nuts or laid with a glue-comb, some air (604) is trapped between the wall and the polystyrene/polyurethane, which is very useful for the moisture regulation of the building. A second layer is composed of glass wool or rockwool, insulation material that can be drilled and easily laid (602). Then, a protective and esthetic plaster board (605) finishes the wall laying.
- Figure 11c is the cross-sectional view CC' of the VIP layout of the wall showed in figure 10. In this cross-sectional view, a first layer is composed of two big VIPs (102) laid vertically and one medium VIP (103) laid vertically. VIPs are glued on the bearing wall (703) with a glue or mortar (603). As the glue is laid in nuts or laid with a glue-comb, some air (604) is trapped between the wall and the polystyrene / polyurethane, which is very useful for the moisture regulation of the building. A second layer is composed of glass wool or rockwool, insulation material that can be drilled and easily laid (602). Then, a protective and esthetic plasterboard (605) finishes the wall laying.

## Claims

1. A vacuum insulation panel (VIP) comprising:
• a Core Box:
i. made of an upper panel, a lower panel, and sides panels forming a decompressed space;
ii. having a certain shape, not necessarily parallelepiped, panels having the possibility to be curved;
iii. with a depression applied inside it comprised between 10-3 Pa and 150 Pa.
• an airtight barrier formed with a continuous metal coating on all the external surfaces of the Core Box, without any Core Box seal or join not being covered with the metal barrier.
• an optional mechanical protection around the metal barrier, optional meaning that some vacuum insulation panels may not have this protection.

2. The vacuum insulation panel according to claim 1 wherein the upper panel, lower panel, and sides panels are made of a polymer or of a fiber reinforced polymer composite material.

3. The vacuum insulation panel according to any preceding claim wherein the decompressed space contains some structural elements such as beams or compression members between the upper and the lower panels made with polymer or fiber reinforced polymer.

4. The vacuum insulation panel according to claim 1 and 2 wherein the decompressed space is filled with a microporous material.

5. The vacuum insulation panel according to claim 1 and 2 wherein the decompressed space contains a mix of structural elements such as beams and compression members between the upper and the lower panel made of polymer or fiber reinforced polymer, as well as some microporous materials.

6. The vacuum insulation panel according to any preceding claim wherein the airtight metal barrier is a continuous metal coating made directly on all the external surfaces of the Core Box with a Physical Vapor Deposition process (PVD) that is carried out after the decompression and the closing of the Core Box.

7. The vacuum insulation panel according to any preceding claim wherein the continuous metal barrier is made of aluminum.

8. The vacuum insulation panel according to any preceding claim wherein the mechanical protection is a box made of a polymer foam, which has the same shape as the Core Box with interior dimensions slightly bigger than the external dimensions of the Core Box. The Protective Box has its own structural integrity and envelope the Core Box without sticking to it, thus avoiding damaging the metal barrier with a shear effect when the Protective Box is slightly deformed.
The sides of the Protective Box are as thin as possible because they constitute a thermal bridge, but they must be thick enough to ensure a proper protection for the particular application for which the VIP will be used.
Within the same VIP range, each VIP have a Protective Box with a different color in order to help the artificial intelligence used in the claim 15.

9. The vacuum insulation panel according to any preceding claim and **characterized in that**:
• The Core Box has a parallelepiped shape;
• The Core Box side panels have a thickness from 0,3 millimeter to 6 millimeters and the Core Box upper and lower panels have a thickness from 0,3 to 10 millimeters;
• The thickness of the airtight metal barrier is:
i. between 0,05 to 3 microns for the metal coating of the Core Box sides surfaces;
ii. between 0,05 to 5 microns for the metal coating of the Core Box upper and lower panels surfaces;
• The external Protective Box, if any, has a thickness of:
i. 0,2 to 30 millimeters for the upper and the lower panels;
ii. 0,2 to 20 millimeters for the side panels;
• The VIP dimensions are the following:
i. VIP length is between 0,1 to 3 meters;
ii. VIP width is between 0,1 to 2,5 meters;
iii. VIP thickness is between 0,007 to 0,13 meters.

10. A manufacturing process of a vacuum insulation panel according to any preceding claim, wherein the process is **characterized in that** it comprises the following steps:
• Firstly, manufacturing of a closed Core Box having a certain shape and having a depression inside it: the under-vacuum Core Box;
• Secondly, manufacturing a continuous airtight metal barrier on all the external surfaces of the Core Box.

11. The first step of the manufacturing process according to claim 10, **characterized in that** the manufacturing process of the under-vacuum Core Box is an under-vacuum overmolding process comprising the following steps (figure 9):
• First, two pieces (505 and 506) are manufactured with an injection molding process, at the same time in two parts of the same mold (502);
• Secondly, the mold is opened after cooling and the sprue (503) and the runner (504) are evacuated;
• Thirdly, the two parts of the mold are moved so that the two pieces (505 and 506) are brought one in front of another. These two pieces have a special shape so that, when they are presented one in front of another, they perfectly fit to form the closed core box with a notch at their junction;
• Fourthly, a depression is applied into the mold cavity (901) with the air evacuation system (906). This depression matches with the depression that will be "trapped" inside the core box, it is then between 10-3 Pa and 150 Pa;
• Fifthly, the notch is filled with an overmolding material with another injection molding process, producing a seal of the two pieces;
• Sixthly, after cooling, the closed core box with a depression inside is liberated.
Alternatively, another version of this process is that the two pieces (505 and 506) are not manufactured in the same mold were the overmolding takes place but in a different mold. Then, they are put in the overmolding mold which then move so that they are placed one in front of another in the overmolding mold. Then, the process is carried out from step 4.
Alternatively, between the step 2 and the step 3, some compression members made of any material, including microporous material, can be added inside the Core Box. As a result, this material is "trapped" inside the Core Box when it is closed under vacuum.
Alternatively, the entire mold can be put inside a vacuum chamber. **In that** case, the vacuum needs to be done inside the vacuum chamber either at the beginning of the process, or as a replacement of the step 4.

12. The second step of the manufacturing process according to claim 10, **characterized in that** the manufacturing of a continuous airtight metal barrier is realized with a Physical Vapor Deposition Process (PVD). This process is carried out as follows:
• Firstly, the under-vacuum Core Box external surfaces can be prepared chemically or mechanically to receive the coating;
• Secondly, the under-vacuum Core Box is tightened by parts of its upper and lower panel and put in the vacuum chamber;
• Thirdly, a PVD process is operated and a metal coating is made on the Core Box sides and part of the upper and lower panel external surfaces;
• Fourthly, a cover is put on the sides of the Core Box and the Core Box can be tighten by its sides;
• Fifhtly, a second PVD process is operated and a metal coating is made on the entire upper and lower panel external surfaces;
• Once the coating is dry, the metallized Core Box can be removed from the vacuum chamber and put under atmospheric pressure.
The first and the second PVD processes can be carried out in reverse.

13. The vacuum insulation panel according to any claim from 1 to 9, wherein:
• The entire Core Box is made of polymer or fiber reinforced polymer and is manufactured with the under-vacuum overmolding process;
• One manufactured piece of the Core Box, called the "upper piece" (202), is the upper panel plus roughly half of the Core Box sides;
• The other manufactured piece of the Core Box, called the "lower piece" (201), is the lower panel, plus the second half of the Core Box sides, plus some compression members;
• The notch filled with the Under-Vacuum Overmolding process is all around the sides of the Core Box and the overmolded material makes an extra thickness all around the sides of the Core Box;
• The compression members can have the shape of a honeycomb (figure 6) or the shape of posts (figure 5).

14. The vacuum insulation panel according to any claim from 1 and 9, wherein:
• The Core Box is made of polymer or fiber reinforced polymer and comprises two pieces:
a. First piece: the Core Box with the missing piece (214) has the shape of a Core Box without the upper panel and with a flared part (215) at the top of its sides;
b. Second piece: the missing piece is the Core Box upper panel;
• The upper panel and the flared part at the top of the sides of the first piece have sufficient surface in contact with each other to be easily glued or thermo-sealed under a vacuum environment;
• A compression member, like for instance a honeycomb, can be added as a third piece before the closing of the Core Box.

15. The process of use, in the building industry, of vacuum insulation panels wherein the process is **characterized in that** the Thermal Resistance of a wall insulated with vacuum insulation panels is certified. The process of use is the following:
• First, once the VIP layer has been realized, meaning once the maximum wall surface has been covered with as few VIPs as possible, and once the holes that cannot be filled with VIPs have been filled with an insulation material that can be cut (the Filling Material), a picture of the wall is taken;
• Then, this picture, together with some information about the wall, is downloaded in a software. This software can for instance be a SAAS (software as a service);
• The software then calculates the Thermal Resistance of the wall.
The accurate automatic calculation by the software is simplified if each VIP Type and the Filling Material have different colors. An artificial intelligence, recognizing each VIP Type and the Filling Material, can calculate the dimension of the wall and the percentage of space used by each VIP Type.
• The software then gives the value of the wall Thermal Resistance and a certification of this value on this particular wall. This certification can later be used for instance by the building Thermal Study Office or the building Architect.

## Amended claims

### Amended claims in accordance with Rule 137(2) EPC.

1. A vacuum insulation panel (VIP) comprising:
• An Under-Vacuum Core Box:
i. made of plain surface panels (upper panel, lower, and sides panels) forming a decompressed space;
ii. having a certain shape, not necessarily parallelepiped, panels having the possibility to be curved;
iii. with a depression applied inside it comprised between 10-3 Pa and 150 Pa;
iv. made of polymer or fiber reinforced polymer composite material (short or long fibers).
• an airtight barrier;
• an optional mechanical protection around the metal barrier, optional meaning that some vacuum insulation panels may not have this protection;
**characterized in that** the airtight barrier is formed with a metal coating:
i. being continuous without any external seal or join not being covered with the metal;
ii. applied directly on all the external surfaces of the Core Box, without the use of any film or sheet wrapped around the Core Box;
iii. having a thickness between 0,05 to 5 microns.

2. The vacuum insulation panel according to claim 1 **characterized in that** the continuous metal coating is applied with a Physical Vapor Deposition (PVD) process.

3. The vacuum insulation panel according to any preceding claim wherein the continuous metal coating is made of aluminum.

4. A manufacturing process of a vacuum insulation panel according to any preceding claim, comprising the following steps:
• Firstly, manufacturing of a closed Core Box having a certain shape and having a depression inside it: the under-vacuum Core Box;
• Secondly, manufacturing an airtight metal barrier
**characterized in that** the second step is the production of a continuous metal coating, having a thickness between 0,05 to 5 microns, directly on all the external surfaces of the Core Box thanks to a Physical Vapor Deposition (PVD) process.

5. The first step of the manufacturing process according to claim 4 leading to the production of an Under-Vacuum Core Box **characterized in that** two pieces of the Core Box are assembled together with an injected over-molded seal which is injected after a high decompression between 10-3 to 150 Pa have been applied in the mold, thus entrapping the decompression inside the Core Box.
